# EUROPEAN PATENT APPLICATION

(11) **EP 4 559 338 A1**
(43) Date of publication of application: **28.05.2025**
(21) Application number: 22953095.1
(22) Date of filing: 28.07.2022
(51) Int. Cl.: A24F 40/65

(54) **AEROSOL GENERATION SYSTEM AND CONTROL METHOD**

(71) Applicant: Japan Tobacco Inc., Tokyo 105-6927 (JP)
(72) Inventor: YAMADA, Manabu, Tokyo 130-8603 (JP)
(74) Representative: Hoffmann Eitle
(86) International application number: PCT/JP2022/029038
(87) International publication number: WO 2024/024002

(57) **Abstract**

[Problem] To provide a mechanism capable of improving usability related to communication.

[Solution] An aerosol generation system comprising: a generation unit that generates an aerosol using a base material containing an aerosol source; a communication unit that sends and receives information wirelessly; a sensor unit that detects a user's operation applied to the aerosol generation system; and a control unit that controls the connection procedures with another aerosol generation system by the communication unit on the basis of a predetermined user's operation detected by the sensor unit.

## Description

### Technical Field

The present disclosure relates to an aerosol generation system and a control method.

### Background Art

Inhaler devices, such as electronic cigarettes and nebulizers, which generate substances for users to inhale, are widespread. For example, an inhaler device uses a substrate that includes an aerosol source for generating an aerosol and a flavor source for imparting a flavor component to the generated aerosol, thus producing an aerosol with an added flavor component. The user can taste the smoke taste by inhaling the aerosol generated by the inhaler device with the added flavor component. The action of the user inhaling the aerosol is hereinafter referred to as a puff or a puff action.

In recent years, it has been considered to equip inhaler devices with a communication function. For example, Patent Literature 1 below discloses technology for detachably attaching an accessory having a communication function to an inhaler device.

### Citation List

### Patent Literature

Patent Literature 1: JP 2021-121191 A

### Summary of Invention

### Technical Problem

However, the technology disclosed in Patent Literature 1 above is still relatively new, and there remains room for improvement from various perspectives.

Accordingly, the present disclosure has been made in view of the above problem, and it is an object of the present disclosure to provide a mechanism capable of improving usability regarding communication.

### Solution to Problem

In order to solve the above problem, according to one aspect of the present invention, there is provided an aerosol generation system including: a generator that generates an aerosol using a substrate containing an aerosol source; a communicator that transmits and receives information wirelessly; a sensor that detects a user action applied to the aerosol generation system; and a controller that controls a connection procedure with another aerosol generation system by the communicator based on a predetermined user action detected by the sensor.

The aerosol generation system may include a container that has an opening through which the substrate can be inserted and accommodates the substrate inserted through the opening, and a lid that opens and closes the opening, and the predetermined user action may include an action to open or close the lid.

The controller may, triggered by detection of the predetermined user action, control the communicator to initiate the connection procedure with the another aerosol generation system as a connection counterpart, and the connection procedure may include executing while alternately switching between transmitting an advertisement and waiting to receive an advertisement.

The controller may select whether to set the another aerosol generation system as a connection counterpart based on information indicating a timing at which the predetermined user action was detected in the aerosol generation system and information indicating a timing at which the predetermined user action was detected in the another aerosol generation system.

The controller may select whether to transmit or receive information to be copied based on information indicating a timing at which the predetermined user action was detected in the aerosol generation system and information indicating a timing at which the predetermined user action was detected in the another aerosol generation system.

The controller may select whether the aerosol generation system operates as a controlling entity or as a controlled entity that operates under control of the controlling entity, based on information indicating a timing at which the predetermined user action was detected in the aerosol generation system and information indicating a timing at which the predetermined user action was detected in the another aerosol generation system.

The communicator may, in the connection procedure, transmit information indicating a timing at which the predetermined user action was detected in the aerosol generation system or receive information indicating a timing at which the predetermined user action was detected in the another aerosol generation system.

The communicator may, in a connection established through the connection procedure, transmit information indicating a timing at which the predetermined user action was detected in the aerosol generation system or receive information indicating a timing at which the predetermined user action was detected in the another aerosol generation system.

The controller may select, based on identification information of the aerosol generation system and identification information of the another aerosol generation system, whether the aerosol generation system operates as a controlling entity or as a controlled entity that operates under control of the controlling entity.

The communicator may transmit the identification information of the aerosol generation system or receive the identification information of the another aerosol generation system in the connection procedure.

The controller may, triggered by detection of a first user action in the aerosol generation system and detection of a second user action corresponding to the first user action in the another aerosol generation system, control the communicator to transmit or receive information to be copied.

The communicator may transmit information indicating the first user action detected in the aerosol generation system or receive information indicating the second user action detected in the another aerosol generation system.

The aerosol generation system may further include a notifier that provides information, and the controller may control the notifier to provide information indicating a start of transmission or reception of the information to be copied or completion of transmission or reception of the information to be copied.

The controller may control the notifier to provide different information between a case of transmitting the information to be copied and a case of receiving the information to be copied.

The information to be copied may include at least one of first control information defining an operation of the generator or second control information defining an operation of the notifier.

The controller may, upon receiving the information to be copied, set a maximum number of times that the information to be copied can be used.

The controller may select a connection counterpart exclusively from the another aerosol generation system in response to detection of a third user action.

The aerosol generation system may include a first device including the generator and a second device capable of connecting to the first device, and the predetermined user action may include an action to disconnect the first device and the second device or connect the first device and the second device.

The aerosol generation system may further include a button, and the predetermined user action may include an action to press the button.

Additionally, in order to solve the above problem, according to another aspect of the present invention, there is provided a control method executed by a computer that controls an aerosol generation system, the aerosol generation system including a generator that generates an aerosol using a substrate containing an aerosol source, a communicator that transmits and receives information wirelessly, and a sensor that detects a user action applied to the aerosol generation system, the control method including: controlling a connection procedure with another aerosol generation system by the communicator based on a predetermined user action detected by the sensor.

### Advantageous Effects of Invention

As described above, according to the present disclosure, a mechanism capable of improving usability regarding communication is provided.

### Brief Description of Drawings

[Fig. 1] Fig. 1 is a diagram illustrating a configuration example of a system according to an embodiment of the present disclosure.
[Fig. 2] Fig. 2 is a schematic diagram schematically illustrating a configuration example of an inhaler device.
[Fig. 3] Fig. 3 is an overall perspective view of the inhaler device according to the present embodiment.
[Fig. 4] Fig. 4 is an overall perspective view of the inhaler device according to the present embodiment with a stick substrate held.
[Fig. 5] Fig. 5 is a diagram for describing the overview of the system according to the present embodiment.
[Fig. 6] Fig. 6 is a sequence diagram illustrating an example of the flow of a process executed in the system according to the present embodiment.
[Fig. 7] Fig. 7 is a sequence diagram illustrating an example of the flow of a process executed in the system according to a first modification.
[Fig. 8] Fig. 8 is a diagram for describing the overview of an aerosol generation system according to a second modification.

### Description of Embodiments

A preferred embodiment of the present disclosure will be described in detail below with reference to the accompanying drawings. Note that, in the present specification and drawings, structural elements having substantially the same functional configuration are denoted by the same reference numeral and overlapping descriptions are omitted.

### <1. Configuration example>

### (1) System configuration example

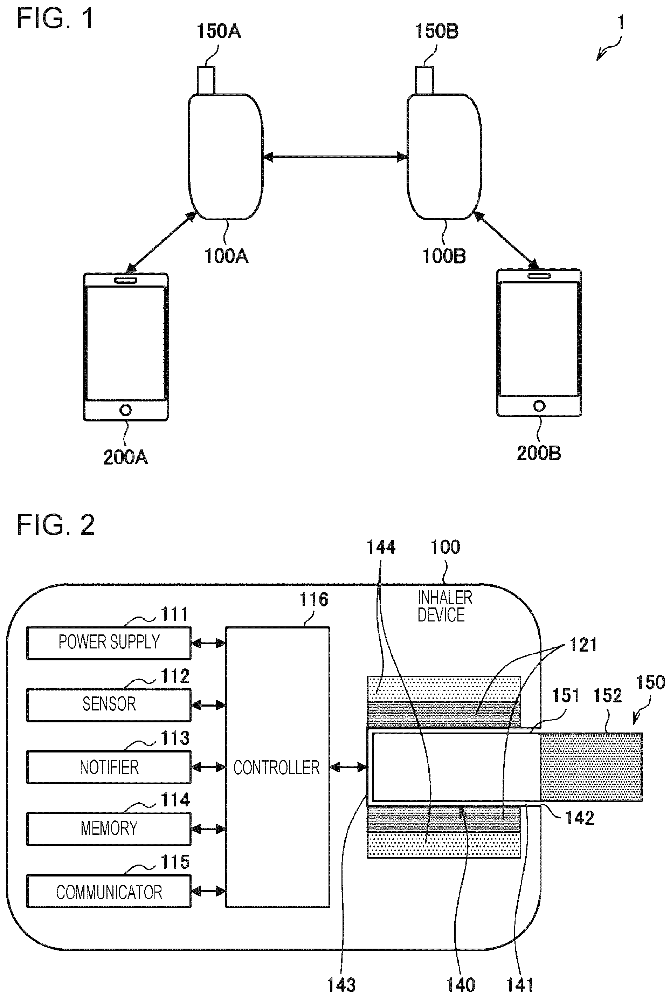

Fig. 1 is a diagram illustrating a configuration example of a system 1 according to an embodiment of the present disclosure. As illustrated in Fig. 1, the system 1 includes inhaler devices 100 (100A and 100B) and terminal devices 200 (200A and 200B).

Each inhaler device 100 is a device that generates a substance that is inhaled by a user. Hereinafter, the substance generated by the inhaler device 100 will be described as being an aerosol. The inhaler device 100 is an example of an aerosol generation device that generates an aerosol. Alternatively, the substance generated by the inhaler device 100 may be a gas. The inhaler device 100 can accommodate a stick substrate 150. The inhaler device 100 uses the accommodated stick substrate 150 to generate an aerosol. The stick substrate 150 is an example of a substrate that contributes to the generation of an aerosol. The stick substrate 150 contains an aerosol source. The inhaler device 100 generates an aerosol by heating the accommodated stick substrate 150.

Each terminal device 200 is a device used by the user of a corresponding one of the inhaler devices 100. The terminal device 200 is associated with the inhaler device 100. The inhaler device 100 and the terminal device 200 may have been paired in advance for wireless communication, or the fact that the user of the inhaler device 100 and the user of the terminal device 200 are identical may be registered in advance with a server that manages information on the inhaler device 100 and the terminal device 200. The terminal device 200 communicates with the inhaler device 100 associated with the terminal device 200 to configure operation settings of the inhaler device 100. The terminal device 200 may be any device, such as a smartphone, a tablet terminal, a wearable device, or a personal computer (PC). Alternatively, the terminal device 200 may be a charger that charges the inhaler device 100.

The system 1 includes the inhaler devices 100 and the terminal devices 200 used by users. In an example, a user using the inhaler device 100A and the terminal device 200A is also referred to as user A. Additionally, a user using the inhaler device 100B and the terminal device 200B is also referred to as user B.

Note that, in the present specification and the drawings, elements with substantially the same functional configuration may be distinguished by assigning the same reference numeral followed by different alphabet letters. For example, multiple elements having substantially the same functional configuration are distinguished as needed, such as the inhaler device 100A and the inhaler device 100B. However, if it is not necessary to particularly distinguish each of multiple elements having substantially the same functional configuration, only the same reference numeral is assigned. For example, if it is not necessary to particularly distinguish between the inhaler device 100A and the inhaler device 100B, they are simply referred to as the inhaler devices 100.

### (2) Configuration example of inhaler device 100

### - Internal configuration example

Fig. 2 is a schematic diagram schematically illustrating a configuration example of an inhaler device. As illustrated in Fig. 2, the inhaler device 100 according to the present configuration example includes a power supply 111, a sensor 112, a notifier 113, a memory 114, a communicator 115, a controller 116, a heater 121, a container 140, and a heat insulator 144.

The power supply 111 stores electric power. The power supply 111 supplies electric power to the structural elements of the inhaler device 100 under the control of the controller 116. The power supply 111 may be a rechargeable battery such as a lithium ion secondary battery.

The sensor 112 acquires various items of information regarding the inhaler device 100. In particular, the sensor 112 detects a user action applied to the inhaler device 100. In an example, the sensor 112 may be a pressure sensor such as a condenser microphone, a flow sensor, or a temperature sensor, and acquire a value generated in accordance with the user's inhalation. In another example, the sensor 112 may be an input device that receives information input by the user, such as a button or a switch. In another example, the sensor 112 may have an inertial sensor, such as a gyroscope sensor or an acceleration sensor, and acquire a value associated with a change in the position or orientation of the inhaler device 100. In another example, the sensor 112 may detect an action such as a change in the position of a lid 14, which will be described later.

The notifier 113 provides information to the user. The notifier 113 may be a light-emitting device that emits light, a display device that displays an image, a sound output device that outputs sound, or a vibration device that vibrates.

The memory 114 stores various items of information for operation of the inhaler device 100. The memory 114 may be a non-volatile storage medium such as flash memory.

The communicator 115 is a communication interface capable of communication in conformity with any wired or wireless communication standard. Such a communication standard may be, for example, Wi-Fi (registered trademark), Bluetooth (registered trademark), Bluetooth Low Energy (BLE) (registered trademark), near-field communication (NFC), or a standard using a low-power wide-area (LPWA).

The controller 116 functions as an arithmetic processing unit and a control circuit, and controls the overall operations of the inhaler device 100 in accordance with various programs. The controller 116 is implemented by an electronic circuit such as a central processing unit (CPU) or a microprocessor, for example.

The container 140 has an internal space 141, and holds the stick substrate 150 in a manner partially accommodated in the internal space 141. The container 140 has an opening 142 that allows the internal space 141 to communicate with outside. The container 140 accommodates the stick substrate 150 that is inserted into the internal space 141 through the opening 142. For example, the container 140 is a tubular body having the opening 142 and a bottom 143 on its ends, and defines the pillar-shaped internal space 141. The container 140 connects with an airflow path that supplies air to the internal space 141. For example, a side surface of the inhaler device 100 has an air inlet hole that is an inlet of air into the airflow path. For example, the bottom 143 has an air outlet hole that is an outlet of the air from the airflow path to the internal space 141.

The stick substrate 150 includes a substrate 151 and an inhalation port 152. The substrate 151 includes an aerosol source. The aerosol source includes a flavor component that is either derived from tobacco or not derived from tobacco. For the inhaler device 100 that is a medical inhaler such as a nebulizer, the aerosol source may include a medicine. For example, the aerosol source may be a liquid including the flavor component that is either derived from tobacco or not derived from tobacco, such as polyhydric alcohol or water. Examples of the polyhydric alcohol include glycerine and propylene glycol. Alternatively, the aerosol source may be a solid including the flavor component that is either derived from tobacco or not derived from tobacco. The stick substrate 150 held by the container 140 includes the substrate 151 at least partially accommodated in the internal space 141 and the inhalation port 152 at least partially protruding from the opening 142. When the user inhales with the inhalation port 152 protruding from the opening 142 in his/her mouth, air flows into the internal space 141 through the airflow path (not illustrated), and the air and an aerosol generated from the substrate 151 reach inside the mouth of the user.

The heater 121 heats the aerosol source to atomize the aerosol source and generate the aerosol. In the example illustrated in Fig. 2, the heater 121 has a film-like shape and surrounds the outer circumference of the container 140. Subsequently, heat produced from the heater 121 heats the substrate 151 of the stick substrate 150 from the outer circumference, generating the aerosol. The heater 121 produces heat when receiving electric power from the power supply 111. In an example, the electric power may be supplied in response to the sensor 112 detecting a start of the user's inhalation and/or an input of predetermined information. Subsequently, the supply of the electric power may be stopped in response to the sensor 112 detecting an end of the user's inhalation and/or an input of predetermined information.

The heat insulator 144 prevents heat from transferring from the heater 121 to the other structural elements. For example, the heat insulator 144 may be a vacuum heat insulator or an aerogel heat insulator.

The configuration example of the inhaler device 100 has been described above. The inhaler device 100 is not limited to the above configuration, and may be configured in various ways as exemplified below.

In an example, the heater 121 may have a blade-like shape, and may be disposed so that the heater 121 protrudes from the bottom 143 of the container 140 toward the internal space 141. In this case, the heater 121 having the blade-like shape is inserted into the substrate 151 of the stick substrate 150 and heats the substrate 151 of the stick substrate 150 from its inside. In another example, the heater 121 may be disposed so that the heater 121 covers the bottom 143 of the container 140. In still another example, the heater 121 may be implemented as a combination of two or more selected from a first heater that covers the outer circumference of the container 140, a second heater having the blade-like shape, and a third heater that covers the bottom 143 of the container 140.

In another example, the container 140 may include an opening/closing mechanism that at least partially opens and closes an outer shell defining the internal space 141. Examples of the opening/closing mechanism include a hinge. In addition, the container 140 may accommodate the stick substrate 150 while sandwiching the stick substrate 150 inserted into the internal space 141 by opening and closing the outer shell. In this case, the heater 121 may be at the sandwiching position of the container 140 and may produce heat while pressing the stick substrate 150.

In addition, means for atomizing the aerosol source is not limited to heating by the heater 121. For example, the means for atomizing the aerosol source may be induction heating. In this case, the inhaler device 100 includes at least an electromagnetic induction source such as a coil that generates a magnetic field instead of the heater 121. The inhaler device 100 may be provided with a susceptor that produces heat by the induction heating, or the stick substrate 150 may include the susceptor.

Note that the heater 121 is an example of a generator that generates an aerosol using the stick substrate 150 accommodated in the container 140. Other examples of the generator include the above-mentioned electromagnetic induction source and/or susceptor.

The inhaler device 100 cooperates with the stick substrate 150 to generate an aerosol to be inhaled by the user. Therefore, the combination of the inhaler device 100 and the stick substrate 150 may be conceived as an aerosol generation system.

### - Appearance configuration example

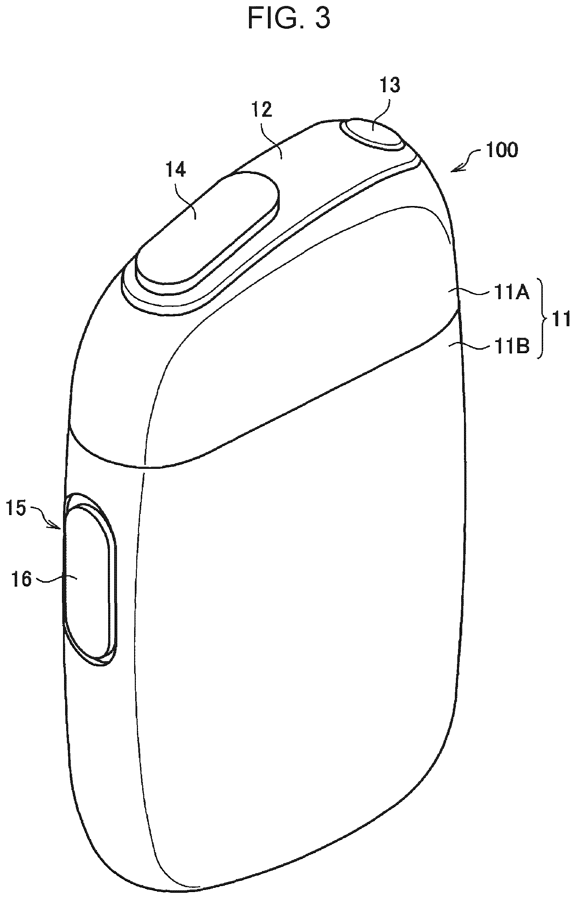

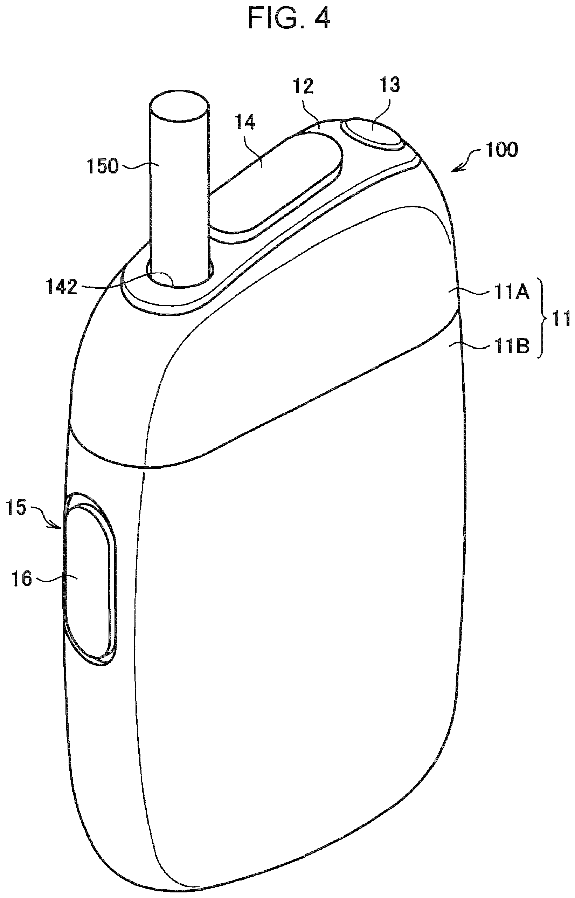

Fig. 3 is an overall perspective view of the inhaler device 100 according to the present embodiment. Fig. 4 is an overall perspective view of the inhaler device 100 according to the present embodiment with the stick substrate 150 accommodated.

As illustrated in Figs. 3 and 4, the inhaler device 100 has a top housing 11A, a bottom housing 11B, a cover 12, a switch 13, the lid 14, a vent 15, and a cap 16. The top housing 11A and the bottom housing 11B are connected to each other to constitute an outer housing 11, which is the outermost of the inhaler device 100. The outer housing 11 is sized to fit into a user's hand. When using the inhaler device 100, the user can hold the inhaler device 100 in the user's hand and inhale the flavor.

The top housing 11A has an opening which is not illustrated, and the cover 12 is coupled to the top housing 11A to close the opening. As illustrated in Fig. 4, the cover 12 has the opening 142 through which the stick substrate 150 can be inserted. The lid 14 is configured to open and close the opening 142 of the cover 12. Specifically, the lid 14 is attached to the cover 12 and is configured to be movable along the surface of the cover 12 between a first position for closing the opening 142 and a second position for opening the opening 142. This enables the lid 14 to allow or restrict access of the stick substrate 150 to the interior of the inhaler device 100 (the internal space 141 illustrated in Fig. 1). Opening the opening 142 using the lid 14 is hereinafter also referred to as opening the lid 14. Additionally, closing the opening 142 using the lid 14 is also referred to as closing the lid 14.

The switch 13 is used to switch on and off the actuation of the inhaler device 100. For example, as illustrated in Fig. 4, the user can operate the switch 13 with the stick substrate 150 inserted into the internal space 141 through the opening 142, thereby supplying electric power to the heater 121 from the power supply 111 and heating the stick substrate 150 without burning it. Once the stick substrate 150 is heated, a flavored aerosol is generated from the aerosol source contained in the stick substrate 150. The user can inhale the flavored aerosol by inhaling the portion of the stick substrate 150 that protrudes from the inhaler device 100 (the portion illustrated in Fig. 4, that is, the inhalation port 152).

The vent 15 is a vent for introducing air into the internal space 141. The air drawn into the interior of the inhaler device 100 from the vent 15 is introduced into the internal space 141, for example, from the bottom 143 of the container 140. The cap 16 is configured to be detachable from the bottom housing 11B. With the cap 16 attached to the bottom housing 11B, the vent 15 is formed between the bottom housing 11B and the cap 16. The cap 16 may have, for example, a through hole or cutout that is not illustrated.

### <2. BLE>

The inhaler device 100 transmits and receives information wirelessly. In particular, the inhaler device 100 performs wireless communication in conformity with BLE. Hereinafter, BLE will be described in detail.

In BLE, the connection procedure between devices is specified as a protocol. A standardized method of using the protocol is defined as a profile. There are two types of profiles: those standardized for each characteristic of the device, and those that are independent of the device's characteristics. The latter profiles are also referred to as generic profiles. Each generic profile operates as a lower layer beneath the profile for each characteristic of the device. Hereinafter, an example of the profiles and protocols defined in BLE will be described.

### - Generic Access Profile (GAP)

GAP is a generic profile that specifies procedures for enabling communication between devices. In GAP, there are two types of roles for devices: central and peripheral. A central device is responsible for controlling communication. A peripheral device connects to and communicates with a central device based on the control by the central device.

A peripheral device first broadcasts an advertising packet (hereinafter also referred to simply as advertisement). The peripheral device then waits to receive a connection request from a central device after transmitting the advertisement. Until the peripheral device receives a connection request, the peripheral device repeatedly transmits the advertisement and waits to receive a connection request. The advertisement is a signal that informs the destination of the advertisement about the existence of the transmission source of the advertisement. The advertisement may include various types of information, such as information about the peripheral device, information specifying the presence or absence of scanning, and information specifying the connection counterpart.

The central device discovers the peripheral device by receiving the advertisement. The central device determines whether to allow a connection with the peripheral device based on the received advertisement. The central device may transmit a scan request, requesting the transmission of further additional information to determine whether to allow the connection. Upon receiving the scan request, the peripheral device transmits the requested additional information. The central device transmits a connection request to the peripheral device that the central device has permitted to connect, thereby establishing the connection. Note that the method of waiting to receive an advertisement and receiving an advertisement from the surroundings is also referred to as passive scanning. In contrast, the method of waiting to receive and receiving an advertisement from the surroundings and then requesting further additional information to be transmitted from the transmission source of the advertisement is also referred to as active scanning.

### -Generic Attribute Profile (GATT)

GATT is a generic profile that defines data transmission and reception, and the data structure. In GATT, there are two types of roles for devices: client and server. A client transmits a request to a server and receives a response from the server. A server receives a request from a client and sends a response. Either the server or the client may notify the other of information. Typically, a peripheral device acts as a server and a central device as a client, but the reverse is also possible.

### -Security Manager (SM)

SM is a protocol for establishing security. In GAP, there are two types of roles for devices: initiator and responder. An initiator corresponds to a central device in GAP. A responder corresponds to a peripheral device in GAP.

In SM, pairing is defined. Pairing is a procedure for generating and exchanging a temporary encryption key. Pairing is performed within a connection established according to the procedures defined in GAP.

In SM, bonding is defined. Bonding is a procedure performed after pairing to generate and exchange a permanent encryption key. The permanent encryption key is stored in each device. For subsequent connections, there is no need to perform bonding again, as the communication takes place using the stored permanent encryption key.

In SM, encryption re-establishment is defined. Encryption re-establishment is the procedure for re-establishing a secure connection using the permanent encryption key stored through bonding.

Typically, pairing with bonding is executed. In contrast, non-bondable pairing is also executable. Unless specifically stated otherwise herein, pairing refers to pairing with bonding and is a concept that encompasses both the pairing and bonding procedures described above. Additionally, unless specifically stated otherwise herein, a connection refers to a secure connection using a permanent encryption key generated, exchanged, and stored through bonding.

### <3. Technical features>

### (1) Overview

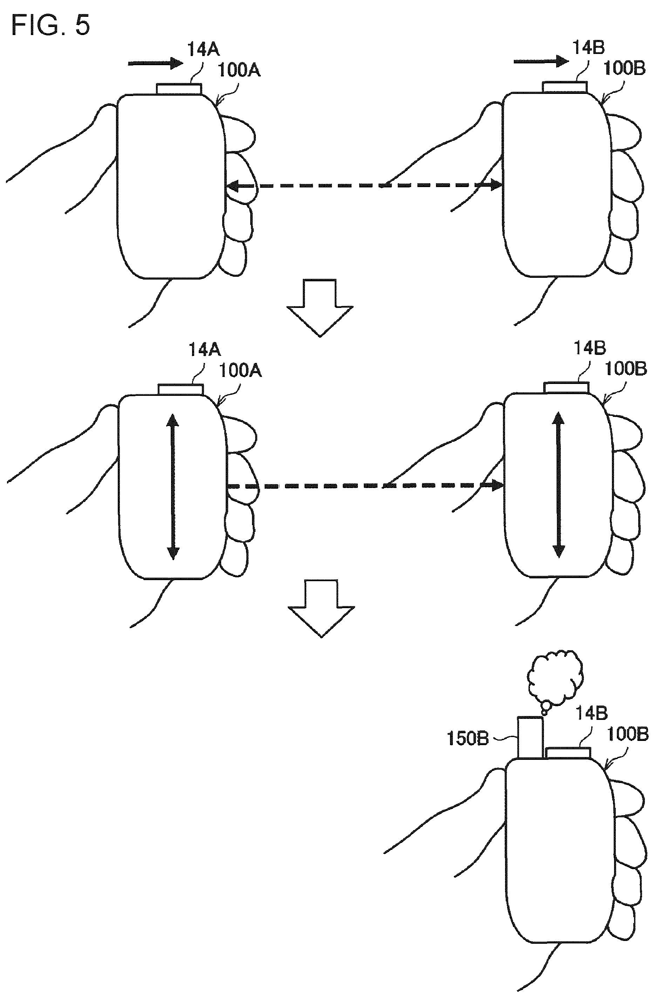

Fig. 5 is a diagram for describing the overview of the system 1 according to the present embodiment. As illustrated in the upper section of Fig. 5, the inhaler device 100A and the inhaler device 100B, triggered by the opening by user A and user B of a lid 14A of the inhaler device 100A and a lid 14B of the inhaler device 100B almost at the same time, execute a connection procedure to establish a wireless connection. Here, almost at the same time refers to the time difference being less than a predetermined threshold. The predetermined threshold may be approximately a few seconds; that is, almost at the same time is a concept that permits a time difference of approximately a few seconds.

Then, as illustrated in the middle section of Fig. 5, when the inhaler device 100A and the inhaler device 100B are each vertically shaken, the inhaler device 100A and the inhaler device 100B transmit and receive information to be copied. In the example illustrated in Fig. 5, the inhaler device 100A transmits information to be copied to the inhaler device 100B.

Thereafter, as illustrated in the lower section of Fig. 5, the inhaler device 100B operates based on the information to be copied received from the inhaler device 100A, such as heating the stick substrate 150 based on the information to be copied. An example of the information to be copied is control information that defines the operation of the inhaler device 100. In that case, the inhaler device 100B can copy (that is, reproduce) the operation of the inhaler device 100A.

As described above, the inhaler device 100 detects a predetermined user action applied to the inhaler device 100. The inhaler device 100 then controls communication with another device based on the detected predetermined user action. The predetermined user action may be an action to open or close the lid 14. That is, the inhaler device 100 may control the connection procedure with another inhaler device 100 based on the action to open or close the lid 14. The inhaler device 100 then controls the transmission and reception of information to and from the other inhaler device 100 based on a change in the position or orientation of the inhaler device 100. According to such a configuration, the connection and transmission and reception of information between the inhaler device 100A and the inhaler device 100B can be executed with a simple action, without involving the terminal device 200A or the terminal device 200B. Thus, it is possible to greatly enhance usability in use cases where, for example, user A wants to reproduce a favorite operation on the inhaler device 100B. Hereinafter, it is assumed that the predetermined user action is the action to open the lid 14.

### (2) Connection procedure

The inhaler device 100 may, triggered by the detection of the predetermined user action, that is, the opening of the lid 14, initiate a connection procedure with another inhaler device 100 as a connection counterpart. The connection procedure includes executing while alternately switching between transmitting an advertisement and waiting to receive an advertisement. That is, the inhaler device 100 operates by switching between functioning as a central device and as a peripheral device. This allows the inhaler device 100A and the inhaler device 100B to discover each other's presence and transmit and receive information about each other before establishing a connection. Note that waiting to receive an advertisement may be passive scanning or active scanning. Additionally, the connection procedure includes a series of procedures for establishing a connection, including transmission of a connection request, pairing, bonding, etc. According to such a configuration, the user can initiate a connection procedure for the inhaler device 100 and another inhaler device 100 by simply opening the lid 14.

### - Selecting connection counterpart

The inhaler device 100 selects a connection counterpart. A connection counterpart is a device with which a connection is established for communication. Here, selecting a connection counterpart may refer to selecting a connection counterpart based on information acquired before establishing a connection. That is, the inhaler device 100 may select a connection counterpart based on information acquired through passive scanning or active scanning. Alternatively, selecting a connection counterpart may refer to repeatedly establishing a connection on a trial basis and then, based on the information acquired from the established connection, either continuing or disconnecting the connection until a connection counterpart with which the connection will be continued is reached.

The inhaler device 100 may select a connection counterpart based on the reception strength of the advertisement. An example of the reception strength is Received Signal Strength Indicator (RSSI). In an example, the inhaler device 100 may select the transmission source of the advertisement whose reception strength exceeds a predetermined threshold as a connection counterpart. However, if there are multiple transmission sources of advertisements whose reception strength exceeds the predetermined threshold, the inhaler device 100 may select a connection counterpart in descending order of the reception strength of the advertisements and attempt to establish a connection.

The inhaler device 100A may select whether to set the inhaler device 100B as a connection counterpart based on information indicating the timing at which the predetermined user action was detected on the inhaler device 100A and information indicating the timing at which the predetermined user action was detected on the inhaler device 100B. That is, the inhaler device 100A may select whether to set the inhaler device 100B as a connection counterpart based on information indicating the timing at which the lid 14A of the inhaler device 100A opened and information indicating the timing at which the lid 14B of the inhaler device 100B opened. An example of information indicating the timing at which the lid 14 of the inhaler device 100 opened is the time at which the lid 14 of the inhaler device 100 opened, or the elapsed time since the opening of the lid 14 of the inhaler device 100. For example, the inhaler device 100A may select the inhaler device 100B as a connection counterpart in the case where the time difference between the timing at which the lid 14A of the inhaler device 100A opened and the timing at which the lid 14B of the inhaler device 100B opened is less than a predetermined threshold. In the meantime, the inhaler device 100A may exclude the inhaler device 100B from being a connection counterpart in the case where the time difference between the timing at which the lid 14A of the inhaler device 100A opened and the timing at which the lid 14B of the inhaler device 100B opened is greater than or equal to the predetermined threshold. According to such a configuration, the inhaler device 100A and the inhaler device 100B can be connected exclusively when user A and user B open the lid 14A and the lid 14B almost at the same time with the intent to transmit and receive information to be copied.

The inhaler device 100A may, in a connection procedure, transmit information indicating the timing at which the predetermined user action was detected on the inhaler device 100A, or receive information indicating the timing at which the predetermined user action was detected on the inhaler device 100B. That is, the inhaler device 100A may, in a connection procedure, transmit information indicating the timing at which the lid 14A of the inhaler device 100A opened, or receive information indicating the timing at which the lid 14B of the inhaler device 100B opened. In an example, the inhaler device 100A and the inhaler device 100B may, in passive scanning or active scanning, transmit and receive information indicating the timing at which the lid 14A opened and information indicating the timing at which the lid 14B opened. According to such a configuration, the inhaler device 100A and the inhaler device 100B can respectively check whether the other device is a suitable connection counterpart before establishing a connection.

In a connection established through a connection procedure, the inhaler device 100A may transmit information indicating the timing at which the predetermined user action was detected on the inhaler device 100A, or receive information indicating the timing at which the predetermined user action was detected on the inhaler device 100B. That is, in a connection established through a connection procedure, the inhaler device 100A may transmit information indicating the timing at which the lid 14A of the inhaler device 100A opened, or receive information indicating the timing at which the lid 14B of the inhaler device 100B opened. In an example, the inhaler device 100A and the inhaler device 100B may, after establishing a connection on a trial basis, transmit and receive information indicating the timing at which the lid 14A opened and information indicating the timing at which the lid 14B opened. According to such a configuration, the inhaler device 100A and the inhaler device 100B can respectively check whether the other device is a suitable connection counterpart after establishing a connection on a trial basis.

### - Selecting central/peripheral device

The inhaler device 100 selects whether the inhaler device 100 operates as a controlling entity or as a controlled entity that operates based on the control by the controlling entity. That is, the inhaler device 100 selects its role as either a central or peripheral device. More specifically, the inhaler device 100 selects, in a connection procedure, whether to transmit a connection request as a central device or to wait to receive a connection request as a peripheral device. Here, selecting the role may refer to selecting the role based on information acquired before establishing a connection. That is, the inhaler device 100 may select its role based on information acquired through passive scanning or active scanning. Alternatively, selecting the role may refer to, after selecting the role and establishing a connection on a trial basis, continuing or changing the role selected on a trial basis based on information acquired through the established connection. Note that changing the role selected on a trial basis refers to disconnecting the connection and re-establishing a connection with the changed role.

The inhaler device 100A may select whether to operate as a central device or to operate as a peripheral device based on information indicating the timing at which the predetermined user action was detected on the inhaler device 100A and information indicating the timing at which the predetermined user action was detected on the inhaler device 100B. That is, the inhaler device 100A may select whether to operate as a central device or to operate as a peripheral device based on information indicating the timing at which the lid 14A of the inhaler device 100A opened and information indicating the timing at which the lid 14B of the inhaler device 100B opened. In an example, the inhaler device 100A may select to operate as a central device in the case where the timing at which the lid 14A opened is earlier than the timing at which the lid 14B opened, and select to operate as a peripheral device otherwise. According to such a configuration, user A and user B can select the inhaler device 100 operating as a central or peripheral device by intentionally shifting the timings of the lid 14A and the lid 14B being opened. Therefore, for example, it facilitates the selection of the inhaler device 100A or 100B with a higher battery level or greater processing capability to function as the central device.

The inhaler device 100A may select whether to operate as a central device or to operate as a peripheral device based on the identification information of the inhaler device 100A and the identification information of the inhaler device 100B. An example of the identification information is a serial number uniquely assigned to each inhaler device 100. The serial number may include information indicating the manufacturing period, such as an increasing number for newly manufactured inhaler devices 100. Additionally, the serial number may include information indicating the functionality of the inhaler device 100, such as including an alphabet letter according to the functionality of the inhaler device 100. In an example, the inhaler device 100A may be determined to operate as a central device in the case where its manufacturing period is older than the inhaler device 100B, and may be selected to operate as a peripheral device otherwise. Hereinafter, the fact that the manufacturing period is older or newer is also referred to as the serial number being older or newer. In another example, the inhaler device 100A may be selected to operate as a central device in the case where the inhaler device 100A has better communication functionality than the inhaler device 100B, and to operate as a peripheral device otherwise. According to such a configuration, whether to operate as a central or peripheral device can be easily selected.

In a connection procedure, the inhaler device 100A may transmit the identification information of the inhaler device 100A or receive the identification information of the inhaler device 100B. In an example, the inhaler device 100A and the inhaler device 100B may transmit and receive their serial numbers through passive scanning or active scanning. According to such a configuration, whether to operate as a central or peripheral device can be easily selected before establishing a connection. Needless to say, the inhaler device 100A may transmit the identification information of the inhaler device 100A or receive the identification information of the inhaler device 100B in a connection established through a connection procedure.

### (3) Transmitting and receiving information to be copied

The inhaler device 100A may, triggered by the detection of a first user action on the inhaler device 100A and the detection of a second user action corresponding to the first user action on the inhaler device 100B, transmit or receive information to be copied. The first user action and the second user action may be the same user action or different user actions. An example of the first user action or the second user action includes an action to change the position or orientation of the inhaler device 100, such as shaking the inhaler device 100 vertically or horizontally. According to such a configuration, user A and user B can execute the transmission and reception of information to be copied by respectively performing the corresponding user actions. In other words, the information to be copied can be transmitted and received exclusively when there is an explicit expression of intent to transmit and receive the information to be copied. Therefore, even if user A and user B happen to open the lids 14 almost at the same time, it is possible to prevent the information to be copied from being transmitted and received.

The inhaler device 100A transmits information indicating the first user action detected on the inhaler device 100A or receives information indicating the second user action detected on the inhaler device 100B. An example of the information indicating the first user action includes information indicating time-series changes in acceleration and angular velocity of the inhaler device 100. The same applies to the information indicating the second user action. Upon receiving the information indicating the second user action from the inhaler device 100B, the inhaler device 100A determines whether the first user action and the second user action have been detected, and the inhaler device 100A can trigger the transmission and reception of the information to be copied. Similarly, upon receiving the information indicating the first user action from the inhaler device 100A, the inhaler device 100B determines whether the first user action and the second user action have been detected, and the inhaler device 100B can trigger the transmission and reception of the information to be copied.

Note that the inhaler device 100A may transmit the information indicating the first user action when operating as a peripheral device, and receive the information indicating the second user action when operating as a central device. That is, the central device determines whether the first user action and the second user action have been detected based on information received from the peripheral device, and the central device can trigger the transmission and reception of the information to be copied.

The inhaler device 100A may select whether to transmit or receive the information to be copied based on information indicating the timing at which the predetermined user action was detected on the inhaler device 100A and information indicating the timing at which the predetermined user action was detected on the inhaler device 100B. That is, the inhaler device 100A may select whether to transmit or receive the information to be copied based on information indicating the timing at which the lid 14A of the inhaler device 100A opened and information indicating the timing at which the lid 14B of the inhaler device 100B opened. In an example, the inhaler device 100A may transmit the information to be copied in the case where the timing at which the lid 14A opened is earlier than the timing at which the lid 14B opened, and receive the information to be copied otherwise. According to such a configuration, user A and user B can select the direction in which the information to be copied is transmitted by intentionally shifting the timings of the lid 14A and the lid 14B being opened.

Note that the inhaler device 100A may select whether to transmit or receive the information to be copied when operating as a central device. In the meantime, the inhaler device 100A, when operating as a peripheral device, may transmit or receive the information to be copied based on the result of selecting a central device.

The information to be copied may include at least one of first control information defining the operation of the heater 121 or second control information defining the operation of the notifier 113. The first control information may be a heating profile. A heating profile is control information for controlling the temperature at which the aerosol source is heated. For example, a heating profile may be information defining a time series transition of the temperature of the heater 121. In that case, the inhaler device 100 causes the temperature of the heater 121 to transition as defined in the heating profile. The temperature at which the aerosol source is heated directly affects the flavor the user tastes. In this regard, making the heating profiles easily copyable between users allows the users to casually enjoy other users' favorite flavors. Additionally, the second control information may be a notification setting. A notification setting is a combination of a condition and information to be provided when the condition is met. A notification setting directly affects the user experience of the inhaler device 100. In this regard, making the notification settings easily copyable between users allows the users to casually enjoy other users' favorite user experiences.

The inhaler device 100 may, upon receiving the information to be copied, set the maximum number of times that the information to be copied can be used. That is, the inhaler device 100 may limit the number of operations based on the received control information. An example of the maximum number of times is once. For example, upon receiving heating profile A from the inhaler device 100A, the inhaler device 100B backs up heating profile B that was used up to that point and then executes heating based on heating profile A. Then, when the number of heating operations based on heating profile A reaches the maximum number of times, the inhaler device 100B deletes heating profile A and will execute heating based on heating profile B the next time. However, if user B likes heating profile A, user B may operate the terminal device 200B to install heating profile A on the inhaler device 100B or to revoke the maximum number of times. According to such a configuration, the state before transmitting and receiving the information to be copied can be easily restored. Therefore, it is possible to reduce the psychological load of exchanging heating profiles or notification settings between users, allowing the users to casually enjoy new experiences.

### (4) Canceling communication

The inhaler device 100 may cancel the communication if a predetermined condition is met. Canceling the communication includes interrupting the connection procedure, disconnecting the already established connection, interrupting the transmission and reception of the information to be copied, and the like. More simply, canceling the communication may include turning off the communication function of the communicator 115.

An example of the predetermined condition is heating the stick substrate 150. That is, the inhaler device 100 may cancel the communication when it is about to start heating the stick substrate 150 or is currently heating the stick substrate 150. According to such a configuration, it is possible to prevent an erroneous connection with another inhaler device 100 and the transmission and reception of the information to be copied, which is triggered by the user opening the lid 14 in order to insert and heat the stick substrate 150.

Another example of the predetermined condition is detecting a cancel operation. An example of the cancel operation is the action to close the lid 14. The inhaler device 100 may restart the connection procedure when the lid 14 is opened the next time. According to such a configuration, in the case where the connection counterpart or the direction in which the information to be copied is transmitted differs from the user's intent, it is possible to restart the connection procedure.

### (5) Information notification

The inhaler device 100 provides various types of information to the user. For example, the inhaler device 100 may cause the light-emitting device to emit light in a light-emitting pattern according to the provided information, and cause the vibration device to vibrate in a vibration pattern according to the provided information. Alternatively, the inhaler device 100 may provide information through the terminal device 200.

In an example, the inhaler device 100 may provide information indicating a start of transmission or reception of the information to be copied or completion of transmission or reception of the information to be copied. Alternatively, the inhaler device 100A may provide information indicating the start of a connection procedure and the establishment of a connection. According to such a configuration, the user can easily grasp the communication status of the inhaler device 100.

In particular, the inhaler device 100 may provide different information between the case of transmitting the information to be copied and the case of receiving the information to be copied. For example, the inhaler device 100 causes the light-emitting device to emit light in different light-emitting patterns and/or causes the vibration device to vibrate in different vibration patterns between the case of transmitting the information to be copied and the case of receiving the information to be copied. According to such a configuration, the user can easily grasp the direction in which the information to be copied is transmitted.

### (6) Flow of process

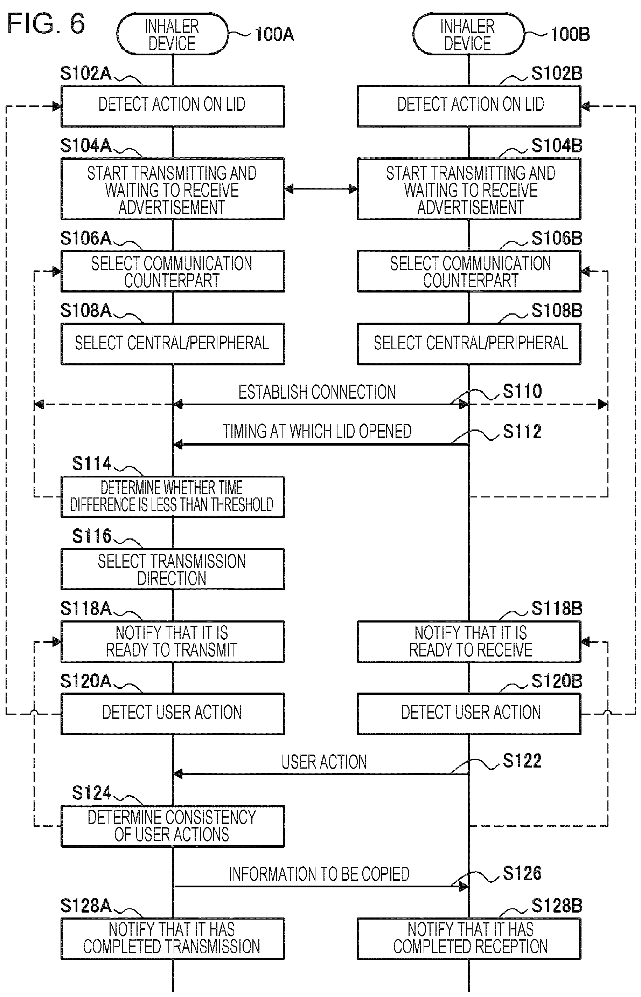

Fig. 6 is a sequence diagram illustrating an example of the flow of a process executed in the system 1 according to the present embodiment. In this sequence, the inhaler device 100A and the inhaler device 100B are involved.

As illustrated in Fig. 6, first, the inhaler device 100A detects an action on the lid 14A (step S102A). Similarly, the inhaler device 100B detects an action on the lid 14B (step S102B). Here, it is assumed that the lid 14A and the lid 14B have been opened with a difference of about one second.

Next, the inhaler device 100A, triggered by the opening of the lid 14A, starts transmitting and waiting to receive an advertisement (step S104A). Similarly, the inhaler device 100B, triggered by the opening of the lid 14B, starts transmitting and waiting to receive an advertisement (step S104B). Each of the inhaler device 100A and the inhaler device 100B transmits an advertisement including its own serial number. Additionally, each of the inhaler device 100A and the inhaler device 100B measures RSSI of the received advertisement.

The inhaler device 100A then selects a connection counterpart (step S106A). For example, the inhaler device 100A selects the inhaler device 100B, which is the transmission source of the advertisement whose RSSI exceeds the predetermined threshold and is the highest, as a connection counterpart. Similarly, the inhaler device 100B selects a connection counterpart (step S106B). For example, the inhaler device 100B selects the inhaler device 100A, which is the transmission source of the advertisement whose RSSI exceeds the predetermined threshold and is the highest, as a connection counterpart.

Next, the inhaler device 100A and the inhaler device 100B select whether to operate as a central or peripheral device (steps S108A and S108B). For example, each of the inhaler device 100A and the inhaler device 100B selects to operate as a central device in the case where its own serial number is older than the serial number included in the received advertisement, and selects to operate as a peripheral device otherwise.

Each of the inhaler device 100A and the inhaler device 100B then establishes a connection (step S110). For example, one of the inhaler device 100A and the inhaler device 100B that operates as a central device transmits a connection request, and the other operating as a peripheral device receives the connection request. Thereafter, the inhaler device 100A and the inhaler device 100B execute a series of procedures including pairing and bonding. Note that, if the connection is not established, such as in the case of a pairing failure, the process returns to steps S106A and S106B.

Note that, in this sequence, an example in which the inhaler device 100A is the central device and the inhaler device 100B is the peripheral device is described. Operation by the peripheral device may be executed based on a request from the central device. However, the description of a request from the central device will be omitted below.

Next, the inhaler device 100B, which is the peripheral device, transmits information indicating the timing at which the lid 14B opened to the inhaler device 100A, which is the central device (step S112). In an example, the inhaler device 100B may transmit, as information indicating the timing at which the lid 14B opened, either the time at which the lid 14B opened or the elapsed time from when the lid 14B opened until a connection is established (for instance, until pairing is completed).

Next, the inhaler device 100A, which is the central device, determines whether the time difference between the timing at which the lid 14A was opened and the timing at which the lid 14B was opened is less than a predetermined threshold (step S114). In the case where it is determined that the time difference is less than the predetermined threshold, the process proceeds to the next. In contrast, in the case where it is determined that the time difference is greater than or equal to the predetermined threshold, the process returns to steps S106A and S106B. Here, it is assumed that the predetermined threshold is five seconds, and the time difference is determined to be less than the predetermined threshold.

The inhaler device 100A then selects the direction in which the information to be copied is transmitted (step S116). In an example, the inhaler device 100A determines that the information to be copied is to be transmitted from the inhaler device 100A to the inhaler device 100B in the case where the timing at which the lid 14A opened is earlier than the timing at which the lid 14B opened. In another example, the inhaler device 100A determines that the information to be copied is to be transmitted from the inhaler device 100B to the inhaler device 100A in the case where the timing at which the lid 14A opened is later than the timing at which the lid 14B opened. Here, it is assumed that the information to be copied is determined to be transmitted from the inhaler device 100A to the inhaler device 100B.

Next, the inhaler device 100A, which is the transmission source of the information to be copied, notifies that it is ready to transmit (step S118A). In the meantime, the inhaler device 100B, which is the destination of the information to be copied, notifies that it is ready to receive (step S118B). It is desirable that the notifications of transmission readiness and reception readiness differ, such as having different light-emitting patterns or vibration patterns.

Each of the inhaler device 100A and the inhaler device 100B then detects a user action (steps S120A and S120B). For example, each of the inhaler device 100A and the inhaler device 100B detects time-series changes in acceleration and angular velocity. Note that, in the case where a cancel operation is detected on either the inhaler device 100A or the inhaler device 100B, the communication is canceled. In that case, the process returns to step S102A and S102B.

Next, the inhaler device 100B, which is the peripheral device, transmits information indicating the detected user action to the inhaler device 100A (step S122). In an example, the inhaler device 100B transmits information indicating the detected time-series changes in acceleration and angular velocity.

The inhaler device 100A, which is the central device, then determines the consistency of the user actions (step S124). Determining the consistency of the user actions refers to determining whether the second user action corresponding to the first user action detected on the inhaler device 100A has been detected on the terminal device 200B. The inhaler device 100A determines the consistency of the user actions based on the time-series changes in acceleration and angular velocity detected in the inhaler device 100A as well as time-series changes in acceleration and angular velocity detected in the inhaler device 100B. In the case where the user actions are determined to be consistent (that is, in the case where it is determined that the second user action corresponding to the first user action has been detected), the process proceeds to the next. In contrast, in the case where the user actions are determined to be inconsistent, the process returns to steps S118A and S118B.

Next, the inhaler device 100A, which is the transmission source of the information to be copied, transmits the information to be copied to the inhaler device 100B (step S126). For example, the inhaler device 100A transmits the heating profile that the inhaler device 100A is using to the inhaler device 100B.

The inhaler device 100A, which is the transmission source of the information to be copied, then notifies that it has completed the transmission (step S128A). In contrast, the inhaler device 100B, which is the destination of the information to be copied, notifies that it has completed the reception (step S128B). It is desirable that the notifications of transmission completion and reception completion differ, such as having different light-emitting patterns or vibration patterns.

An example of the flow of the process in the system 1 has been described above. Note that the above describes an example in which the inhaler device 100A, which is the central device, is the transmission source of the information to be copied; however, the present disclosure is not limited to such examples. The inhaler device 100B, which is the peripheral device, may be the transmission source of the information to be copied.

Additionally, when the process returns to steps S106A and S106B, the inhaler devices 100 may notifier their users of the error and prompt the users to change the location or reopen the lids 14. Similarly, when the process returns to steps S118A and 118B, the inhaler devices 100 may notifier their users of the error and prompt the users to redo the first user action and the second user action.

### (7) Specific examples of selecting connection counterpart

Hereinafter, an example will be described in an environment where four inhaler devices 100, 100A to 100D, are present, and the inhaler device 100 and the inhaler device 100B select each other as its connection counterpart. Note that, when the serial numbers are arranged in order from the oldest to the newest, they are assumed to be the inhaler device 100A, inhaler device 100B, inhaler device 100C, and inhaler device 100D.

### - First specific example

This specific example is an example of the case in which the inhaler device 100A and the inhaler device 100B are located at a close distance, and the lid 14A and the lid 14B are opened almost at the same time. Each of the inhaler devices 100A to 100D's advertisement reception strength is indicated in Table 1 below. The numerals in the table represent the RSSI in units of [dBm].

### [Table 1]

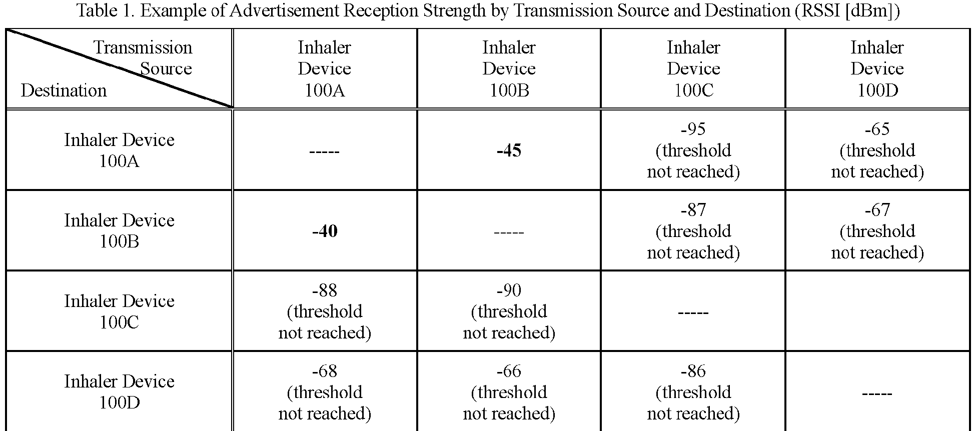

According to Table 1 above, the inhaler device 100A selects the inhaler device 100B, which is the transmission source of the advertisement whose RSSI exceeds the predetermined threshold, as a connection counterpart. In the meantime, the inhaler device 100B selects the inhaler device 100A, which is the transmission source of the advertisement whose RSSI exceeds the predetermined threshold, as a connection counterpart. The inhaler device 100A and the inhaler device 100B, based on their serial numbers, determine that the inhaler device 100A is a central device and the inhaler device 100B is a peripheral device. Then, the inhaler device 100A transmits a connection request and establishes a connection with the inhaler device 100B. Thereafter, the inhaler device 100A receives information indicating the timing at which the lid 14B of the inhaler device 100B was opened, and, based on the time difference between the timings at which the lid 14A and the lid 14B were opened, confirms that the inhaler device 100B is a suitable connection counterpart.

### - Second specific example

This specific example is an example in which the inhaler device 100A, inhaler device 100B, and inhaler device 100D are located at close distances. Note that, in this specific example, it is assumed that, although the lid 14A and the lid 14B were opened almost at the same time, a lid 14D of the inhaler device 100D was opened at a timing that greatly differs from the lid 14A and the lid 14B. Each of the inhaler devices 100A to 100D's advertisement reception strength is indicated in Table 2 below. The numerals in the table represent the RSSI in units of [dBm].

### [Table 2]

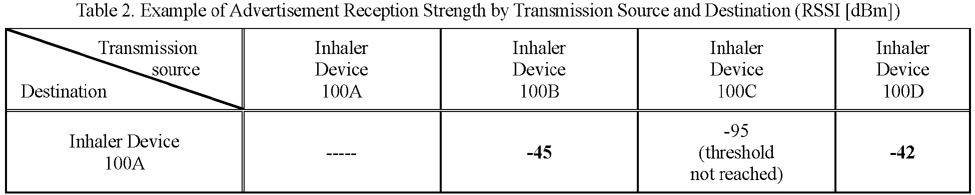

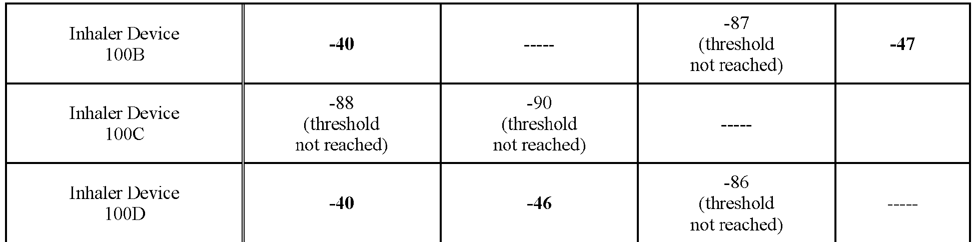

According to Table 1 above, the inhaler device 100A selects the inhaler device 100D, which is the transmission source of the advertisement whose RSSI exceeds the predetermined threshold and is the highest, as a connection counterpart. The inhaler device 100B selects the inhaler device 100A, which is the transmission source of the advertisement whose RSSI exceeds the predetermined threshold and is the highest, as a connection counterpart. The inhaler device 100D selects the inhaler device 100A, which is the transmission source of the advertisement whose RSSI exceeds the predetermined threshold and is the highest, as a connection counterpart.

Therefore, the inhaler device 100A and the inhaler device 100D first try to establish a connection. That is, the inhaler device 100A and the inhaler device 100D, based on their serial numbers, determine that the inhaler device 100A is a central device and the inhaler device 100D is a peripheral device. Then, the inhaler device 100A transmits a connection request and establishes a connection with the inhaler device 100D. Thereafter, the inhaler device 100A receives information indicating the timing at which the lid 14D of the inhaler device 100D was opened, and, based on the time difference between the timings at which the lid 14A and the lid 14D were opened, confirms that the inhaler device 100D is an unsuitable connection counterpart. Thus, the inhaler device 100A disconnects from the inhaler device 100D.

Thereafter, the inhaler device 100A selects the inhaler device 100B, which is the transmission source of the advertisement whose RSSI exceeds the predetermined threshold and is the second highest, as a connection counterpart. Then, the inhaler device 100A tries to establish a connection with the inhaler device 100B. The subsequent process is as described above in the first specific example.

### - Third specific example

This specific example is an example in the same environment as the second specific example, but the advertisement reception strengths are different from the second specific example. Each of the inhaler devices 100A to 100D's advertisement reception strength is indicated in Table 3 below. The numerals in the table represent the RSSI in units of [dBm].

### [Table 3]

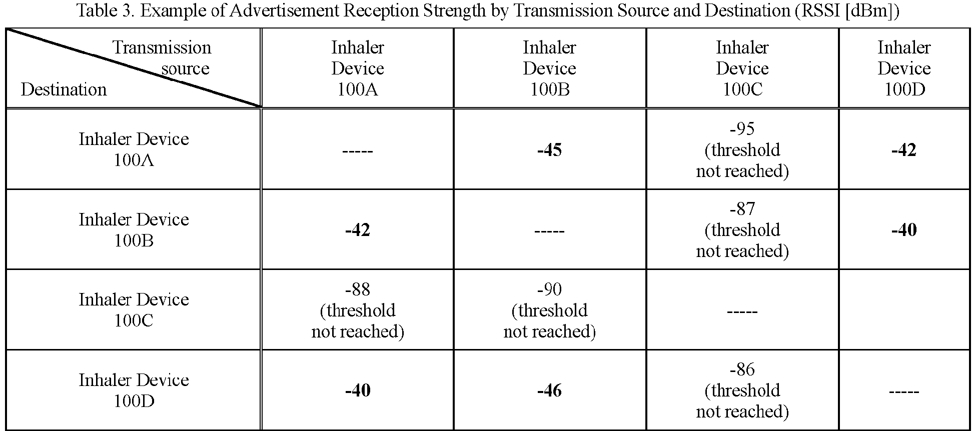

According to Table 1 above, the inhaler device 100A selects the inhaler device 100D, which is the transmission source of the advertisement whose RSSI exceeds the predetermined threshold and is the highest, as a connection counterpart. The inhaler device 100B selects the inhaler device 100D, which is the transmission source of the advertisement whose RSSI exceeds the predetermined threshold and is the highest, as a connection counterpart. The inhaler device 100D selects the inhaler device 100A, which is the transmission source of the advertisement whose RSSI exceeds the predetermined threshold and is the highest, as a connection counterpart.

Therefore, the inhaler device 100A and the inhaler device 100D first try to establish a connection. The inhaler device 100A and the inhaler device 100D, based on their serial numbers, determine that the inhaler device 100A is a central device and the inhaler device 100D is a peripheral device. Then, the inhaler device 100A transmits a connection request and establishes a connection with the inhaler device 100D. Thereafter, the inhaler device 100A receives information indicating the timing at which the lid 14D of the inhaler device 100D was opened, and, based on the time difference between the timings at which the lid 14A and the lid 14D were opened, confirms that the inhaler device 100D is an unsuitable connection counterpart. Thus, the inhaler device 100A disconnects from the inhaler device 100D.

Thereafter, the inhaler device 100D selects the inhaler device 100B, which is the transmission source of the advertisement whose RSSI exceeds the predetermined threshold and is the second highest, as a connection counterpart. Then, the inhaler device 100D tries to establish a connection with the inhaler device 100B. The attempt to connect the inhaler device 100B and the inhaler device 100D ends in failure, following a similar flow to the attempt to connect the inhaler device 100A and the inhaler device 100D.

According to the process described above, the inhaler device 100A and the inhaler device 100B have excluded the inhaler device 100D from being a connection counterpart. The inhaler device 100A selects the inhaler device 100B, which is the transmission source of the advertisement whose RSSI exceeds the predetermined threshold and is the second highest, as a connection counterpart. Similarly, the inhaler device 100B selects the inhaler device 100A, which is the transmission source of the advertisement whose RSSI exceeds the predetermined threshold and is the second highest, as a connection counterpart. Thereafter, the inhaler device 100A and the inhaler device 100B try to establish a connection. The subsequent process is as described above in the first specific example.

### <4. Supplement>

While the preferred embodiment of the present disclosure has been described in detail above with reference to the accompanying drawings, the present disclosure is not limited to such examples. It is obvious that those with ordinary skill in the art to which the present disclosure pertains may conceive various modifications or variations within the scope of the technical concepts described in the claims, and these are understood to naturally fall within the technical scope of the present disclosure.

### (1) First modification

The inhaler device 100 may, triggered by the opening of the lid 14, initiate a connection procedure not only with another inhaler device 100 but also with the terminal device 200. Therefore, it is desirable to have the capability to control which connection counterpart to prioritize when the lid 14 opens, whether it be another inhaler device 100 or the terminal device 200.

Accordingly, the inhaler device 100 selects a connection counterpart exclusively from another inhaler device 100 when operating in a first operating mode (corresponding to a predetermined operating mode). That is, the inhaler device 100, when operating in the first operating mode, excludes the terminal device 200 from being a connection counterpart. In contrast, the inhaler device 100 may, when operating in a second operating mode, select a connection counterpart exclusively from the terminal device 200. That is, the inhaler device 100 may, when operating in the second operating mode, exclude another inhaler device 100 from being a connection counterpart. Note that the inhaler device 100 can, based on a serial number included in an advertisement, determine whether the transmission source of the advertisement is another inhaler device 100 or the terminal device 200, and determine whether it is a suitable connection counterpart. According to such a configuration, the inhaler device 100 can select a suitable connection counterpart.

The inhaler device 100 may operate in the first operating mode in response to detection of a third user action. That is, the inhaler device 100 may select a connection counterpart exclusively from another inhaler device 100 in response to detection of the third user action. In contrast, the inhaler device 100 may operate in the second operating mode when no third user action is detected. That is, the inhaler device 100 may select a connection counterpart exclusively from the terminal device 200 when no third user action is detected. The inhaler device 100 may detect the third user action within a predetermined time after the opening of the lid 14. An example of the third user action is the action to change the position or orientation of the inhaler device 100, such as shaking the inhaler device 100 vertically or horizontally. According to such a configuration, the user can easily select which connection counterpart to set, either another inhaler device 100 or the terminal device 200, depending on whether or not the user performs the third user action.

The inhaler device 100 may provide information indicating the operating mode. According to such a configuration, the user can easily grasp the operating mode of the inhaler device 100.

Note that, when operating in the first operating mode, detection of the first user action and the second user action may be omitted. That is, after the connection between the inhaler device 100A and the inhaler device 100B has been established, information to be copied may be transmitted and received even if the first user action and the second user action are not performed. An explicit expression of intent to transmit and receive information to be copied, which can be conveyed through the first user action and the second user action, is substitutable by the third user action. According to such a configuration, the user's operation load can be reduced.

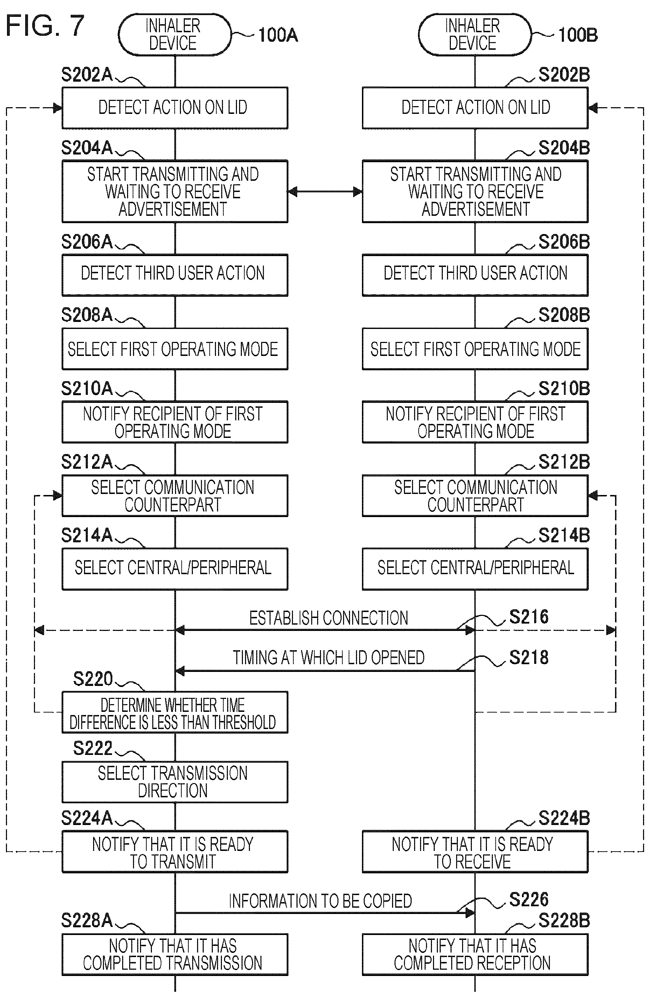

Hereinafter, the flow of a process according to the present modification will be described with reference to Fig. 7. Fig. 7 is a sequence diagram illustrating an example of the flow of a process executed in the system 1 according to the present modification. In this sequence, the inhaler device 100A and the inhaler device 100B are involved.

The process according to steps S202A and S202B to steps S204A and S204B is the same as the process according to steps S102A and S102B to steps S104A and S104B described above with reference to Fig. 6.

Next, the inhaler device 100A and the inhaler device 100B detect the third user action (steps S206A and S206B). For example, the inhaler device 100A detects the action to shake the inhaler device 100A vertically or horizontally three times as the third user action. The inhaler device 100B also detects the action to shake the inhaler device 100B vertically or horizontally three times as the third user action.

The inhaler device 100A and the inhaler device 100B then select the first operating mode (steps S208A and S208B).

Next, the inhaler device 100A and the inhaler device 100B provide information indicating that they are to operate in the first operating mode (steps S210A and S210B).

The inhaler device 100A then selects a connection counterpart (step S212A). For example, the inhaler device 100A selects the inhaler device 100B, which is the transmission source of the advertisement whose RSSI exceeds the predetermined threshold and is the highest, and which includes a serial number as the inhaler device 100 as a connection counterpart. Similarly, the inhaler device 100B selects a connection counterpart (step S212B). For example, the inhaler device 100B selects the inhaler device 100A, which is the transmission source of the advertisement whose RSSI exceeds the predetermined threshold and is the highest, and which includes a serial number as the inhaler device 100 as a connection counterpart.

The process according to steps S214A and S214B to steps S224A and S224B is the same as the process according to steps S108A and S108B to steps S118A and S118B described above with reference to Fig. 6. Note that the inhaler device 100A and the inhaler device 100B may provide a grace period of about ten seconds for accepting a cancel operation in steps S224A and S224B. In this grace period, if a cancel operation is detected in either the inhaler device 100A or the inhaler device 100B, the communication is canceled. In that case, the process returns to steps S202A and S202B.

The process according to steps S226 to S228A and S228B is the same as the process according to steps S126 to S128A and S128B described above with reference to Fig. 6.

### (2) Second modification

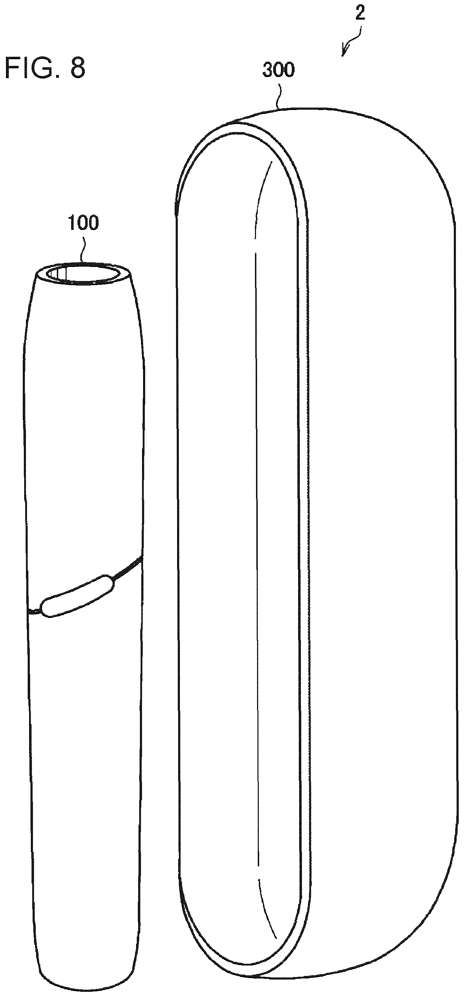

Fig. 8 is a diagram for describing the overview of an aerosol generation system 2 according to a second modification. As illustrated in Fig. 8, the aerosol generation system 2 according to the present modification includes the inhaler device 100 (an example of a first device) and a charger 300 (an example of a second device). The internal configuration of the inhaler device 100 is the same as the configuration described above with reference to Fig. 2. Unlike the appearance configuration example illustrated in Figs. 3 and 4, it is not necessary for the inhaler device 100 to have the lid 14. The charger 300 is a device configured to charge the inhaler device 100. The charger 300 is connectable to the inhaler device 100. When the inhaler device 100 is connected, the charger 300 charges the inhaler device 100. When the connection to the inhaler device 100 is disconnected, the charger 300 stops charging the inhaler device 100. For example, the charger 300 has a power supply that stores electric power, a charging terminal that can be connected to the inhaler device 100, and a controller that executes power supply from the power supply to the inhaler device 100 when the inhaler device 100 is connected to the charging terminal. The charger 300 may be configured to be capable of accommodating the inhaler device 100 while being connected to the inhaler device 100.

The charger 300 may have a communicator that transmits and receives information wirelessly. The charger 300 may be wirelessly connected to another aerosol generation system 2 (that is, another inhaler device 100 or another charger 300). In that case, the controller 116 of the inhaler device 100 may control a connection procedure with another aerosol generation system 2 by the communicator of the charger 300. Alternatively, the controller of the charger 300 may control a connection procedure with another aerosol generation system 2 by the communicator of the charger 300.

Additionally, the inhaler device 100 may be wirelessly connected to another aerosol generation system 2 (that is, another inhaler device 100 or another charger 300). As described in the above embodiment, the controller 116 of the inhaler device 100 may control a connection procedure with another aerosol generation system 2 by the communicator 115 of the inhaler device 100. Alternatively, the controller of the charger 300 may control a connection procedure with another aerosol generation system 2 by the communicator 115 of the inhaler device 100.

### (3) Third modification

As described in the above embodiment, the inhaler device 100 controls a connection procedure with another inhaler device 100 based on a detected predetermined user action. The above embodiment describes an example in which the predetermined user action is the action to open or close the lid 14; however, the present disclosure is not limited to such examples.

In an example, the predetermined action may be the action to press a button provided on the inhaler device 100. An example of the button is the switch 13 illustrated in Figs. 3 and 4. It is acceptable for the button to be provided on the charger 300.

In another example, the predetermined action may be the action to disconnect the inhaler device 100 and the charger 300, or the action to connect the inhaler device 100 and the charger 300. In other words, the predetermined action may be the action to start charging the inhaler device 100, or the action to stop charging the inhaler device 100.

The predetermined user action may include one or more of the actions exemplified above. That is, the inhaler device 100 may control a connection procedure with another inhaler device 100 based on the detection of the action to open the lid 14, the action to close the lid 14, the action to press the switch 13, the action to disconnect the inhaler device 100 and the charger 300, or the action to connect the inhaler device 100 and the charger 300.

### (3) Others

The above embodiment describes an example in which the inhaler device 100 performs communication in conformity with BLE; however, the present disclosure is not limited to such examples. The inhaler device 100 may perform communication in conformity with any wireless communication standard, such as Wi-Fi.

The above embodiment describes an example in which the inhaler device 100 heats the stick substrate 150 to generate an aerosol; however, the present disclosure is not limited to such examples. The inhaler device 100 may be configured as a so-called liquid atomization type aerosol generator that generates an aerosol by heating and atomizing an aerosol source as a liquid. The technology of the present disclosure is also applicable to a liquid atomization type aerosol generator.

Each of the devices described herein may be implemented as a single device, or some or all of them may be implemented as separate devices. For example, the inhaler device 100 as an aerosol generation system may be implemented as multiple devices. For example, part of the functions of the communicator 115 and the controller 116 of the inhaler device 100 described above with reference to Fig. 2 may be provided in a device other than the inhaler device 100. More specifically, the function of performing communication in conformity with BLE and the function of controlling communication in conformity with BLE may be provided in a charger that charges the inhaler device 100.

Note that a series of processes performed by each of the devices described herein may be implemented using software, hardware, and a combination of software and hardware. Programs constituting the software are pre-stored, for example, on a recording medium (specifically, a computer-readable non-transitory storage medium) provided inside or outside each device. Each program is then loaded into a RAM upon execution by, for example, a computer controlling each device described herein, and executed by a processing circuit, such as a CPU. The recording medium includes, for example, a magnetic disk, an optical disk, a magneto-optical disk, a flash memory, and the like. Additionally, the computer programs mentioned above may also be delivered, for example, over a network, without the use of a recording medium. Moreover, the computer mentioned above may be an application-specific integrated circuit such as an ASIC, a general-purpose processor that executes functions by loading software programs, a computer on a server used for cloud computing, or the like. Also, a series of processes performed by each device described herein may be distributed among and processed by multiple computers.

Furthermore, the processes described using flowcharts and sequence diagrams herein may not necessarily be executed in the order illustrated. Some processing steps may be executed in parallel. Moreover, additional processing steps may also be employed, and some of the processing steps may be omitted.

Note that the following configurations also fall within the technical scope of the present disclosure.
(1) An aerosol generation system including:
   a generator that generates an aerosol using a substrate containing an aerosol source;
   a communicator that transmits and receives information wirelessly;
   a sensor that detects a user action applied to the aerosol generation system; and
   a controller that controls a connection procedure with another aerosol generation system by the communicator based on a predetermined user action detected by the sensor.
(2) The aerosol generation system according to (1) described above, including:
   a container that has an opening through which the substrate can be inserted, and accommodates the substrate inserted through the opening; and
   a lid that opens and closes the opening,
   wherein the predetermined user action includes an action to open or close the lid.
(3) The aerosol generation system according to (1) or (2) described above, wherein:
   the controller, triggered by detection of the predetermined user action, controls the communicator to initiate the connection procedure with the another aerosol generation system as a connection counterpart, and
   the connection procedure includes executing while alternately switching between transmitting an advertisement and waiting to receive an advertisement.
(4) The aerosol generation system according to any one of (1) to (3) described above, wherein:
   the controller selects whether to set the another aerosol generation system as a connection counterpart based on information indicating timing at which the predetermined user action was detected in the aerosol generation system and information indicating timing at which the predetermined user action was detected in the another aerosol generation system.
(5) The aerosol generation system according to any one of (1) to (4) described above, wherein:
   the controller selects whether to transmit or receive information to be copied based on information indicating timing at which the predetermined user action was detected in the aerosol generation system and information indicating timing at which the predetermined user action was detected in the another aerosol generation system.
(6) The aerosol generation system according to (1) to 5 described above, wherein:
   the controller selects whether the aerosol generation system operates as a controlling entity or as a controlled entity that operates under control of the controlling entity, based on information indicating timing at which the predetermined user action was detected in the aerosol generation system and information indicating timing at which the predetermined user action was detected in the another aerosol generation system.
(7) The aerosol generation system according to any one of (1) to (6) described above, wherein:
   the communicator, in the connection procedure, transmits information indicating timing at which a predetermined user action was detected in the aerosol generation system or receive information indicating timing at which the predetermined user action was detected in the another aerosol generation system.
(8) The aerosol generation system according to any one of (1) to (6) described above, wherein:
   the communicator, in a connection established through the connection procedure, transmits information indicating timing at which the predetermined user action was detected in the aerosol generation system or receive information indicating timing at which the predetermined user action was detected in the another aerosol generation system.
(9) The aerosol generation system according to any one of (1) to (8) described above, wherein:
   the controller selects whether the aerosol generation system operates as a controlling entity or as a controlled entity that operates under control of the controlling entity, based on identification information of the aerosol generation system and identification information of the another aerosol generation system.
(10) The aerosol generation system according to (9) described above, wherein:
   the communicator transmits the identification information of the aerosol generation system or receive the identification information of the another aerosol generation system in the connection procedure.
(11) The aerosol generation system according to any one of (1) to (10) described above, wherein:
   the controller, triggered by detection of a first user action in the aerosol generation system and detection of a second user action corresponding to the first user action in the another aerosol generation system, control the communicator to transmit or receive information to be copied.
(12) The aerosol generation system according to (11) described above, wherein:
   the communicator transmits information indicating the first user action detected in the aerosol generation system or receive information indicating the second user action detected in the another aerosol generation system.
(13) The aerosol generation system according to (11) or (12) described above, further including:
   a notifier that provides information,
   wherein the controller controls the notifier to provide information indicating a start of transmission or reception of the information to be copied or completion of transmission or reception of the information to be copied.
(14) The aerosol generation system according to (13) described above, wherein:
   the controller controls the notifier to provide different information between a case of transmitting the information to be copied and a case of receiving the information to be copied.
(15) The aerosol generation system according to (13) or (14) described above, wherein:
   the information to be copied includes at least one of first control information defining an operation of the generator or second control information defining an operation of the notifier.
(16) The aerosol generation system according to any one of (11) to (15) described above, wherein:
   the controller, upon receiving the information to be copied, sets a maximum number of times that the information to be copied can be used.
(17) The aerosol generation system according to any one of (1) to (16) described above, wherein:
   the controller selects a connection counterpart exclusively from the another aerosol generation system in response to detection of a third user action.
(18) The aerosol generation system according to any one of (1) to (17) described above, including:
   a first device including the generator; and
   a second device capable of connecting to the first device,
   wherein the predetermined user action includes an action to disconnect the first device and the second device or connect the first device and the second device.
(19) The aerosol generation system according to any one of (1) to (18) described above, further including:
   a button,
   wherein the predetermined user action includes an action to press the button.
(20) A control method executed by a computer that controls an aerosol generation system,
   the aerosol generation system including
   a generator that generates an aerosol using a substrate containing an aerosol source,
   a communicator that transmits and receives information wirelessly; and
   a sensor that detects a user action applied to the aerosol generation system,
   the control method comprising:
      controlling a connection procedure with another aerosol generation system by the communicator based on a predetermined user action detected by the sensor.

### Reference Signs List

- 1: system
- 100: inhaler device
- 111: power supply
- 112: sensor
- 113: notifier
- 114: memory
- 115: communicator
- 116: controller
- 121: heater
- 140: container
- 141: internal space
- 142: opening
- 143: bottom
- 144: heat insulator
- 150: stick substrate
- 151: substrate
- 152: inhalation port
- 11: outer housing
- 12: cover
- 13: switch
- 14: lid
- 15: vent
- 16: cap
- 200: terminal device
- 210: input unit
- 220: output unit
- 230: detector
- 240: communicator
- 250: memory
- 260: controller
- 300: charger

## Claims

1. An aerosol generation system comprising:
a generator that generates an aerosol using a substrate containing an aerosol source;
a communicator that transmits and receives information wirelessly;
a sensor that detects a user action applied to the aerosol generation system; and
a controller that controls a connection procedure with another aerosol generation system by the communicator based on a predetermined user action detected by the sensor.

2. The aerosol generation system according to claim 1, comprising:
a container that has an opening through which the substrate can be inserted, and accommodates the substrate inserted through the opening; and
a lid that opens and closes the opening,
wherein the predetermined user action includes an action to open or close the lid.

3. The aerosol generation system according to claim 1 or 2, wherein:
the controller, triggered by detection of the predetermined user action, controls the communicator to initiate the connection procedure with the another aerosol generation system as a connection counterpart; and
the connection procedure includes executing while alternately switching between transmitting an advertisement and waiting to receive an advertisement.

4. The aerosol generation system according to any one of claims 1 to 3, wherein:
the controller selects whether to set the another aerosol generation system as a connection counterpart based on information indicating a timing at which the predetermined user action was detected in the aerosol generation system and information indicating a timing at which the predetermined user action was detected in the another aerosol generation system.

5. The aerosol generation system according to any one of claims 1 to 4, wherein:
the controller selects whether to transmit or receive information to be copied based on information indicating a timing at which the predetermined user action was detected in the aerosol generation system and information indicating a timing at which the predetermined user action was detected in the another aerosol generation system.

6. The aerosol generation system according to claims 1 to 5, wherein:
the controller selects whether the aerosol generation system operates as a controlling entity or as a controlled entity that operates under control of the controlling entity, based on information indicating a timing at which the predetermined user action was detected in the aerosol generation system and information indicating a timing at which the predetermined user action was detected in the another aerosol generation system.

7. The aerosol generation system according to any one of claims 1 to 6, wherein:
the communicator, in the connection procedure, transmits information indicating a timing at which a predetermined user action was detected in the aerosol generation system or receive information indicating a timing at which the predetermined user action was detected in the another aerosol generation system.

8. The aerosol generation system according to any one of claims 1 to 6, wherein:
the communicator, in a connection established through the connection procedure, transmits information indicating a timing at which the predetermined user action was detected in the aerosol generation system or receive information indicating a timing at which the predetermined user action was detected in the another aerosol generation system.

9. The aerosol generation system according to any one of claims 1 to 8, wherein:
the controller selects whether the aerosol generation system operates as a controlling entity or as a controlled entity that operates under control of the controlling entity, based on identification information of the aerosol generation system and identification information of the another aerosol generation system.

10. The aerosol generation system according to claim 9, wherein:
the communicator transmits the identification information of the aerosol generation system or receive the identification information of the another aerosol generation system in the connection procedure.

11. The aerosol generation system according to any one of claims 1 to 10, wherein:
the controller, triggered by detection of a first user action in the aerosol generation system and detection of a second user action corresponding to the first user action in the another aerosol generation system, control the communicator to transmit or receive information to be copied.

12. The aerosol generation system according to claim 11, wherein:
the communicator transmits information indicating the first user action detected in the aerosol generation system or receive information indicating the second user action detected in the another aerosol generation system.

13. The aerosol generation system according to claim 11 or 12, further comprising:
a notifier that provides information,
wherein the controller controls the notifier to provide information indicating a start of transmission or reception of the information to be copied or completion of transmission or reception of the information to be copied.

14. The aerosol generation system according to claim 13, wherein:
the controller controls the notifier to provide different information between a case of transmitting the information to be copied and a case of receiving the information to be copied.

15. The aerosol generation system according to claim 13 or 14, wherein:
the information to be copied includes at least one of first control information defining an operation of the generator or second control information defining an operation of the notifier.

16. The aerosol generation system according to any one of claims 11 to 15, wherein:
the controller, upon receiving the information to be copied, sets a maximum number of times that the information to be copied can be used.

17. The aerosol generation system according to any one of claims 1 to 16, wherein:
the controller selects a connection counterpart exclusively from the another aerosol generation system in response to detection of a third user action.

18. The aerosol generation system according to any one of claims 1 to 17, comprising:
a first device including the generator; and
a second device capable of connecting to the first device,
wherein the predetermined user action includes an action to disconnect the first device and the second device or connect the first device and the second device.

19. The aerosol generation system according to any one of claims 1 to 18, further comprising:
a button,
wherein the predetermined user action includes an action to press the button.

20. A control method executed by a computer that controls an aerosol generation system,
the aerosol generation system including
a generator that generates an aerosol using a substrate containing an aerosol source,
a communicator that transmits and receives information wirelessly, and
a sensor that detects a user action applied to the aerosol generation system,
the control method comprising:
controlling a connection procedure with another aerosol generation system by the communicator based on a predetermined user action detected by the sensor.
